# EUROPEAN PATENT APPLICATION

(11) **EP 4 807 949 A1**
(43) Date of publication of application: **16.09.2026**
(21) Application number: 26161895.3
(22) Date of filing: 03.03.2026
(51) Int. Cl.: H02K 3/12, H02K 3/28

(54) **CONTINUOUS WINDING ASSEMBLY**

(30) Priority: 14.03.2025 KR 20250033137
(71) Applicant: Hyundai Mobis Co., Ltd., Gangnam-gu Seoul 06141 (KR)
(72) Inventor: YEON, Jun Mo, 16891 Yongin-si, Gyeonggi-do (KR); KWON, Jeong Ki, 16891 Yongin-si, Gyeonggi-do (KR)
(74) Representative: Jung, Minkyu

(57) **Abstract**

A continuous winding assembly applied to a stator, which includes predetermined slot groups disposed adjacent to and continuously along poles of a rotor, with one slot group provided for each pole of the rotor. The continuous winding assembly comprising: a first winding part including a plurality of windings each formed with a standard pitch; and a second winding part including a plurality of windings each formed with the standard pitch and wound to have a predetermined phase difference from the first winding part, wherein the first and second winding parts are electrically connected to form a single series winding with opposite ends connected to a current input/output terminal and a neutral point.

## Description

### BACKGROUND OF THE DISCLOSURE

### Field of the Disclosure

The present disclosure relates to a continuous winding assembly, and more specifically, to a continuous winding assembly wound around a motor stator.

### Description of the Related Art

Continuous hairpin windings include multiple conductors that pass continuously through multiple slots, which minimize welds, thereby improving quality control and productivity. Typically, a single phase includes two or more parallel windings, each of which includes two conductors with opposite current directions. In the related art, when a single phase includes three parallel windings, the windings are disposed by interchanging positions of the parallel windings within a slot group by partially or fully applying a non-standard pitch to balance the counter-electromotive force of the three parallel windings. Accordingly, six types of continuous conductors with different patterns are required, and furthermore, due to an increase in the manufacturing cost of each winding and the complexity of the winding method of each winding, production efficiency is reduced.

### Documents of Related Art

(Patent Document 1) Korean Laid-Open Patent No. 10-2021-0031762, "A winding weaving method for an electromechanical component"

### SUMMARY OF THE DISCLOSURE

The present disclosure is directed to providing a continuous winding assembly that combines two types of windings to form a parallel winding, thereby simplifying a manufacturing process and reducing process costs by requiring fewer winding forming machines than the related art that uses twice the number of parallel windings.

The present disclosure is also directed to providing a continuous winding assembly in which each parallel winding is formed to include only a standard pitch, and in which the same winding pattern may be expanded and modified into winding structures having 4, 6, 8, 10, or more layers, thereby improving ease of winding design and increasing versatility and applicability in various situations.

According to one embodiment of the present disclosure, there is provided an continuous winding assembly applied to a stator, which includes predetermined slot groups disposed adjacent to and continuously along poles of a rotor, with one slot group provided for each pole of the rotor, the continuous winding assembly including a first winding part including a plurality of windings each formed with a standard pitch; and a second winding part including a plurality of windings each formed with a standard pitch and wound to have a predetermined phase difference from the first winding part, wherein the first and second winding parts are electrically connected to form a single series winding whose both ends are connected to a current input/output terminal and a neutral point.

Windings are wound in multiple layers in a radial direction of a stator, and the number of layers is an even number.

The first winding part may be wound around odd-numbered layers based on a radially innermost side of the stator, and the second winding part may be wound around even-numbered layers based on the radially innermost side of the stator.

A winding of the first winding part wound around a (2n-1)^{th} layer in the radial direction of the stator may be electrically connected to a winding of the second winding part wound around a 2n^{th} layer in the radial direction of the stator (where n is any natural number).

Each slot group may include N slots having N different phases, and the first winding part may include windings inserted corresponding one-to-one to the N slot phases (where N is any natural number).

A lead-in wire of a winding of the first winding part having a phase inserted into a first slot on one circumferential side of the slot group may be electrically connected to the current input/output terminal, and a lead-out wire thereof may be electrically connected to the winding included in the second winding part.

Each slot group may include N slots having N different phases, and the second winding part may include windings inserted corresponding one-to-one to the N slot phases (where N is any natural number).

A lead-in wire of a winding of the second winding part having a phase inserted into a first slot on an opposite circumferential side of the slot group may be electrically connected to the neutral point, and a lead-out wire thereof may be electrically connected to the winding included in the first winding part.

Each of the slot groups into which both ends of the first winding part are inserted may be circumferentially adjacent to each of the slot groups into which both ends of the second winding part are inserted.

The first winding part and the second winding part may form a single series winding, and the series winding may be formed by alternately connecting the windings of the first winding part to the windings of the second winding part.

### BRIEF DESCRIPTION OF THE DRAWINGS

FIG. 1 is a schematic view illustrating a continuous winding assembly of the present disclosure.
FIG. 2 is a perspective view illustrating a first winding part of the present disclosure.
FIG. 3 is a perspective view illustrating a second winding part of the present disclosure.
FIG. 4 is a partial schematic view illustrating the continuous winding assembly applied to multiple layers according to the present disclosure.
FIG. 5 is a schematic view illustrating parallel windings of the first winding part of the present disclosure.
FIG. 6 is a schematic view illustrating parallel windings of the second winding part of the present disclosure.
FIGS. 7 and 8 are partial schematic views of the continuous winding assembly of the present disclosure.

### DETAILED DESCRIPTION OF THE DISCLOSURE

Hereinafter, the technical spirit of the present disclosure will be described in more detail with reference to the accompanying drawings. Prior to the description, terms or words used in the present specification and claims should not be interpreted as limited to their usual or dictionary meanings and should be interpreted as meanings and concepts that conform to the technical idea of the present disclosure based on the principle that the inventor can appropriately define the concepts of the terms in order to describe his or her own invention in the best way.

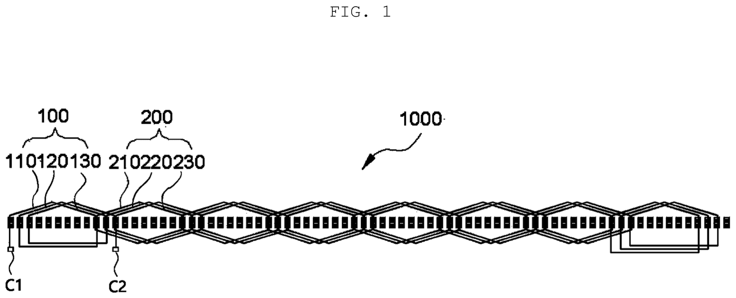

Hereinafter, a basic configuration of a continuous winding assembly 1000 of the present disclosure will be described with reference to FIGS. 1 to 3.

The present disclosure relates to a continuous winding assembly 1000 applied to a stator including, for each pole of a rotor, predetermined slot groups S_{g} disposed adjacent to and continuously along poles of a rotor, with one slot group S_{g} provided for each pole of the rotor, and as illustrated in FIG. 1, the continuous winding assembly 1000 of the present disclosure may include a first winding part 100 and a second winding part 200 wound to have a predetermined phase difference with the first winding part 100. The first winding part 100 and the second winding part 200 are preferably electrically connected to form a single series winding whose both ends are connected to a current input/output terminal and a neutral line. In this case, a terminal connection terminal C1 connected to the current input/output terminal and a neutral line connection terminal C2 connected to the neutral line may be formed at both ends of the series winding including the first winding part 100 and the second winding part 200.

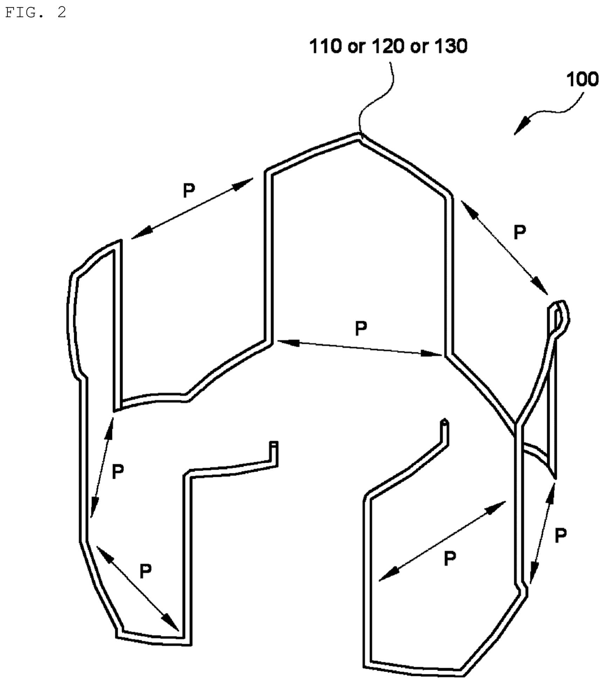

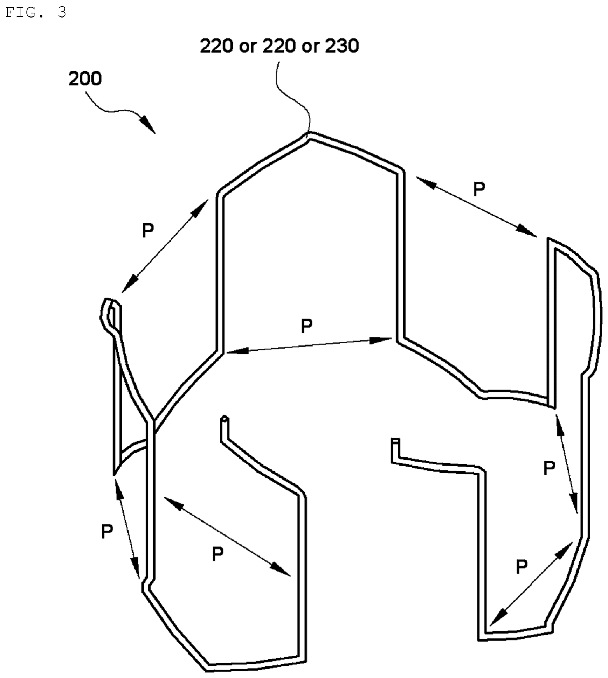

In this case, as illustrated in FIGS. 2 and 3, each winding included in the first winding part 100 and the second winding part 200 may be inserted into a slot, and distances between slot insertion portions extending in an axial direction of the stator may each be formed with a standard pitch p. Here, standard pitch p refers to a pitch with the same interval as the distance between two adjacent poles. In this case, each winding constituting the first winding part 100 may be formed in the same shape with only a phase difference from each other, which is also applied to each winding constituting the second winding part 200. That is, the continuous winding assembly 1000 of the present disclosure may include only two types of the first winding part 100 and the second winding part 200. Accordingly, the windings wound around the continuous winding assembly 1000 may be manufactured using fewer winding forming devices than in conventional inventions, and furthermore, the manufacturing process can be simplified, and process costs can be reduced.

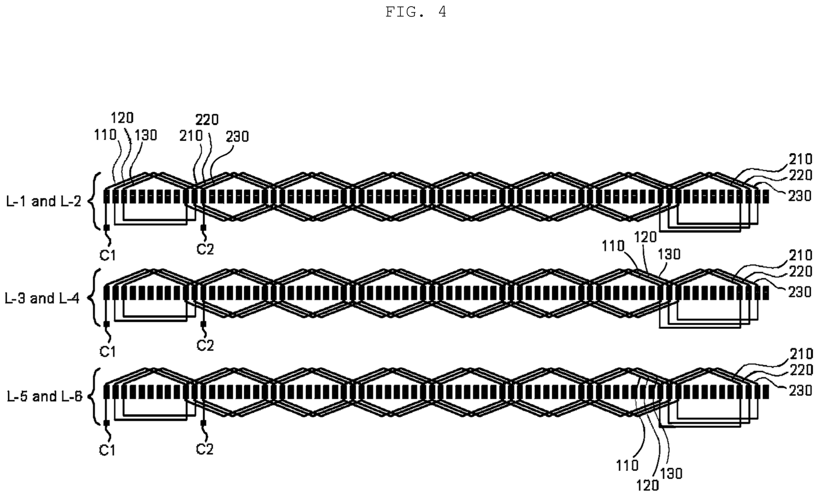

Hereinafter, the continuous winding assembly 1000 when applied to multiple layers will be described in more detail with reference to FIG. 4.

The windings included in the first winding part 100 and the second winding part 200 of the present disclosure may be wound in multiple layers in a radial direction of the stator. In this case, an even number of layers is preferable because the first winding part 100 and the second winding part 200 are wound in different layers. More specifically, the first winding part 100 may be wound around odd-numbered layers based on a radially innermost side of the stator, and the second winding part 200 may be wound around even-numbered layers based on the radially innermost side of the stator. For example, when the number of radial layers of the stator is six, each winding of the first winding part 100 may be wound around a first layer (L-1), a third layer (L-3), and a fifth layer (L-5), and each winding of the second winding part 200 may be wound around a second layer (L-2), a fourth layer (L-4), and a sixth layer (L-6).

In this case, the layers into which the windings of the first winding part 100 are inserted and the layers into which the windings of the second winding part 200 are inserted, which are electrically connected, may be adjacent layers. More specifically, a winding of the first winding part 100 wound around a (2n-1)^{th} layer in the radial direction of the stator may be electrically connected to a winding of the second winding part 200 wound around a 2n^{th} layer in the radial direction of the stator (where n is any natural number).

More specifically, when the number of stator slots is denoted by s and the number of rotor magnet poles is denoted by p, the number of slots corresponding to one phase per magnet pole (the number of slots per slot group S_{g}) N may be N=s/(p*3). That is, each slot group S_{g} may include N slots of different phases. In this case, each of the first winding part 100 and the second winding part 200 may include N windings inserted corresponding one-to-one to N slot phases. In more detail, since the windings included in the first winding part 100 and the second winding part 200 each have a standard pitch, one winding may be inserted into a slot of a constant phase in all slot groups S_{g}.

In this case, a lead-in wire of a winding having a phase inserted into a first slot on one circumferential side of the slot group S_{g} of the first winding part 100 may be connected to the current input/output terminal, and a lead-in wire of a winding having a phase inserted into a last slot on one circumferential side (first slot on an opposite side) of the slot group S_{g} of the second winding part 200 may be connected to the neutral point. In this case, a lead-in wire of a winding having a phase inserted into an n^{th} slot on one circumferential side of the slot group S_{g} of the first winding part 100 and a lead-in wire of a winding having a phase inserted into an (n-1)^{th} slot on one circumferential side of the slot group S_{g} of the second winding part 200 may be connected, and the lead-out wire of the winding having the phase inserted into the n^{th} slot on one circumferential side of the slot group S_{g} of the first winding part 100 and a lead-out wire of a winding having a phase inserted into an n^{th} slot on one circumferential side of the slot group S_{g} of the second winding part 200 may be connected. In this case, n denotes any natural number 1<n≤N. While maintaining the above pattern, the number of parallel windings may be changed. In addition, the number of conductor layers per slot may be twice the number of parallel windings. In this way, by electrically connecting the windings in adjacent layers, a length and volume of the connection portion can be reduced, thereby enabling a more compact overall design of the stator.

In one example, when the number of parallel windings is 3, the number of conductor layers per slot may be 6, and in this case, the winding of the first winding part 100 wound around the first layer (L-1) may be electrically connected to the winding of the second winding part 200 wound around the second layer (L-2), the winding of the first winding part 100 wound around the third layer (L-3) may be electrically connected to the winding of the second winding part 200 wound around the fourth layer (L-4), and the winding of the first winding part 100 wound on the fifth layer (L-5) may be electrically connected to the winding of the second winding part 200 wound around the sixth layer (L-6).

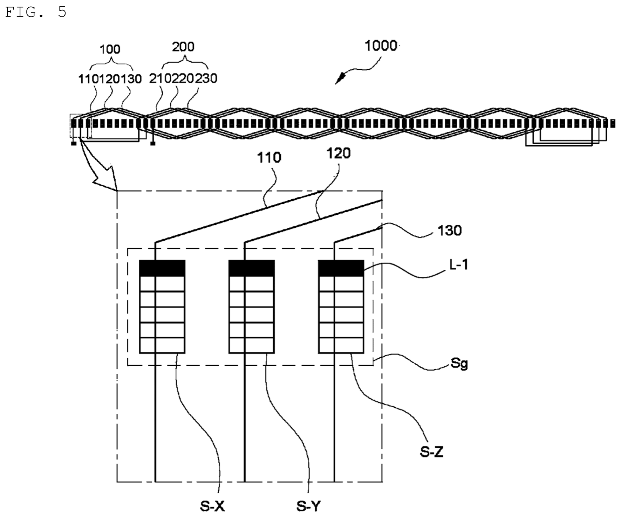

Hereinafter, a winding method of the first winding part 100 and the second winding part 200 of the present disclosure and a coupling relationship between the first winding part 100 and the second winding part 200 will be described in more detail with reference to FIGS. 5 to 8.

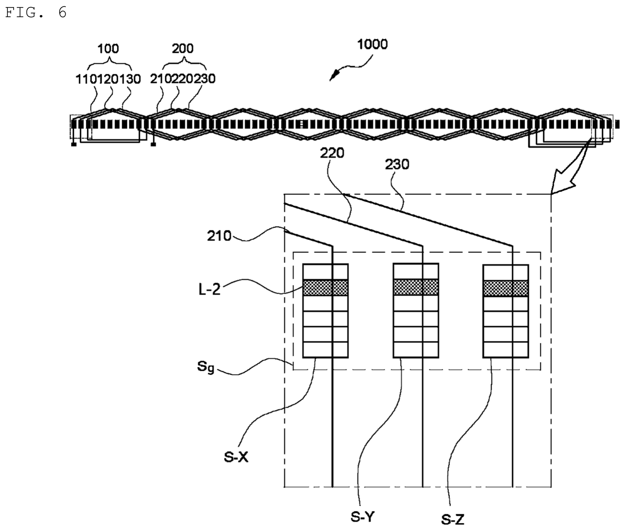

As illustrated in FIG. 5, in an example in which the number of parallel windings is three, each slot group S_{g} may include an X^{th} slot (S-X), a Y^{th} slot (S-Y), and a Z^{th} slot (S-Z), which have three different phases. The X^{th} slot (S-X), the Y^{th} slot (S-Y), and the Z^{th} slot (S-Z) may be provided in a row in the circumferential direction of the stator. In this case, the first winding part 100 may include at least one 1-1 winding 110 wound around the X^{th} slot (S-X), at least one 1-2 winding 120 wound around the Y^{th} slot (S-Y), and at least one 1-3 winding 130 wound around the Z^{th} slot (S-Z). In addition, as illustrated in FIG. 6, the second winding part 200 may include at least one 2-1 winding 210 wound around the X^{th} slot (S-X), at least one 2-2 winding 220 wound around the Y^{th} slot (S-Y), and at least one 2-3 winding 230 wound around the Z^{th} slot (S-Z).

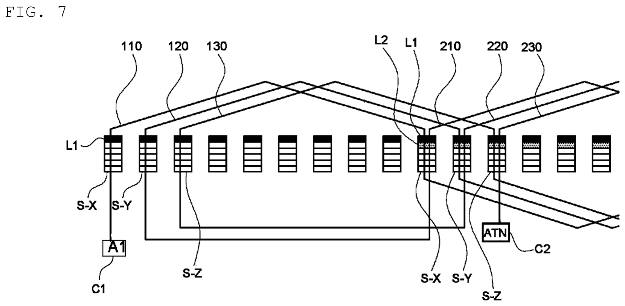

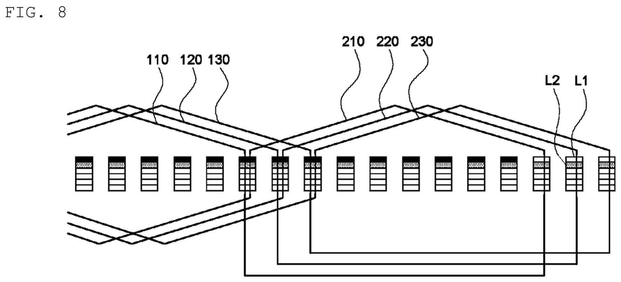

In this case, as illustrated in FIG. 7, a lead-in wire of one end of the 1-1 winding 110 may be electrically connected to the current input/output terminal, and a lead-out wire of the other end may be electrically connected to the winding included in the second winding part 200. In addition, as illustrated in FIG. 8, a lead-out wire of one end of the 2-3 winding 230 may be electrically connected to the neutral line, and a lead-in wire of the other end may be electrically connected to the winding included in the first winding part 100.

More specifically, the first winding part 100 and the second winding part 200 may form one series winding, and the series winding may be formed by alternately connecting the windings of the first winding part 100 to the windings of the second winding part 200, and more specifically, the lead-in wire of the 1-1 winding 110 may be electrically connected to the current input/output terminal, the lead-out wire of the 1-1 winding 110 may be connected to the lead-out wire of the 2-1 winding 210, and the lead-in wire of the 2-1 winding 210 may be connected to the lead-in wire of the 1-2 winding 120. In addition, the lead-out wire of the 1-2 winding 120 may be connected to a lead-out wire of the 2-2 winding 220, a lead-in wire of the 2-2 winding 220 may be connected to a lead-in wire of the 1-3 winding 130, a lead-out wire of the 1-3 winding 130 may be connected to the lead-out wire of the 2-3 winding 230, and the lead-in wire of the 2-3 winding 230 may be electrically connected to the neutral line. Accordingly, all parallel windings included in the first winding part 100 and the second winding part 200 may be connected to form a single series winding.

In addition, as illustrated in FIGS. 7 and 8, each slot group S_{g} into which both ends of the first winding part 100 are inserted may be circumferentially adjacent to each slot group S_{g} into which both ends of the second winding part 200 are inserted. Accordingly, the length and volume of the connection portion can be reduced, thereby enabling a more compact overall design of the stator.

According to the continuous winding assembly of the present disclosure having the above configuration, two types of windings can be combined to form a parallel winding, thereby simplifying a manufacturing process and reducing process costs by requiring fewer winding forming machines than the related art that uses twice the number of parallel windings.

In addition, each parallel winding can be formed to include only a standard pitch, and the same winding pattern can be expanded and modified into winding structures having 4, 6, 8, 10, or more layers, thereby improving ease of winding design and increasing versatility and applicability in various situations.

The technical spirit of the present disclosure should not be construed as limited to the above-described embodiments. Not only the scope of applications is diverse, but also various modifications may be made by those skilled in the art without departing from the gist of the present disclosure as claimed in the claims. Accordingly, these improvements and changes fall within the scope of the present disclosure as long as they are obvious to those skilled in the art.

## Claims

1. A continuous winding assembly applied to a stator, which includes predetermined slot groups disposed adjacent to and continuously along poles of a rotor, with one slot group provided for each pole of the rotor, the continuous winding assembly comprising:
a first winding part including a plurality of windings each formed with a standard pitch; and
a second winding part including a plurality of windings each formed with the standard pitch and wound to have a predetermined phase difference from the first winding part,
wherein the first and second winding parts are electrically connected to form a single series winding with opposite ends connected to a current input/output terminal and a neutral point.

2. The continuous winding assembly of claim 1, wherein the windings are wound in a plurality of layers in a radial direction of the stator, and
the number of layers is an even number.

3. The continuous winding assembly of claim 2, wherein the first winding part is wound in odd-numbered layers based on a radially innermost side of the stator, and the second winding part is wound in even-numbered layers based on the radially innermost side of the stator.

4. The continuous winding assembly of claim 2 or 3, wherein a winding of the first winding part wound around a (2n-1)^{th} layer in the radial direction of the stator is electrically connected to a winding of the second winding part wound around a 2n^{th} layer in the radial direction of the stator, wherein n is a natural number.

5. The continuous winding assembly of any one of claims 1 to 4, wherein each of the slot groups includes N slots having N different slot phases, and
the first winding part includes windings, each of the windings inserted in one-to-one correspondence with a respective one of the N different slot phases, wherein N is a natural number.

6. The continuous winding assembly of claim 5, wherein a lead-in wire of a winding of the first winding part having a phase inserted into a first slot on one circumferential side of the slot group is electrically connected to the current input/output terminal, and a lead-out wire thereof is electrically connected to the winding included in the second winding part.

7. The continuous winding assembly of any one of claims 1 to 4, wherein each of the slot groups includes N slots having N different slot phases, and
the second winding part includes windings, each of the windings inserted in one-to-one correspondence with a respective one of the N different slot phases, wherein N is a natural number.

8. The continuous winding assembly of claim 7, wherein a lead-in wire of a winding of the second winding part having a phase inserted into a first slot on an opposite circumferential side of the slot group is electrically connected to the neutral point, and a lead-out wire thereof is electrically connected to the winding included in the first winding part.

9. The continuous winding assembly of any one of claims 1 to 8, wherein each of the slot groups into which both ends of the first winding part are inserted is circumferentially adjacent to each of the slot groups into which both ends of the second winding part are inserted.

10. The continuous winding assembly of any one of claims 1 to 9, wherein the first winding part and the second winding part form a single series winding, and
the series winding is formed by alternately connecting the windings of the first winding part to the windings of the second winding part.
